# EUROPEAN PATENT APPLICATION

(11) **EP 3 239 184 A1**
(43) Date of publication of application: **01.11.2017**
(21) Application number: 16166783.7
(22) Date of filing: 25.04.2016
(51) Int. Cl.: C08F 2/10

(54) **THERMOPLASTIC POLYMER PARTICLES AND A LITHOGRAPHIC PRINTING PLATE PRECURSOR**

(71) Applicant: Agfa Graphics NV, 2640 Mortsel (BE)
(72) Inventor: Van Aert, Hubertus, 2640 Mortsel (BE); Stamenovic, Milan, 2640 Mortsel (BE); Loccufier, Johan, 2640 Mortsel (BE); Hillewaere, Xander, 2640 Mortsel (BE)
(74) Representative: Vanderstede, Els

(57) **Abstract**

Thermoplastic polymer particles including at least one polymer including monomeric units derived from the monomers selected from ethylene, (vinyl)chloride, methyl(meth)acrylate, ethyl (meth)acrylate, vinylidene chloride, (meth)acrylonitrile, vinylcarbazole and/or styrene,
characterized in that the polymer further comprise at least one monomeric unit including an oxalylamido moiety.

## Description

### FIELD OF THE INVENTION

The present invention relates to thermoplastic polymer particles including at least one polymer comprising a monomeric unit including an oxalylamido moiety and a lithographic printing plate precursor including these thermoplastic polymer particles.

### BACKGROUND OF THE INVENTION

Lithographic printing presses use a so-called printing master such as a printing plate which is mounted on a cylinder of the printing press. The master carries a lithographic image on its surface and a print is obtained by applying ink to said image and then transferring the ink from the master onto a receiver material, which is typically paper. In conventional, so-called "wet" lithographic printing, ink as well as an aqueous fountain solution (also called dampening liquid) are supplied to the lithographic image which consists of oleophilic (or , i.e. ink-accepting, water-repelling) areas as well as hydrophilic (or oleophobic, i.e. water-accepting, ink-repelling) areas. In so-called driographic printing, the lithographic image consists of ink-accepting and ink-abhesive (ink-repelling) areas and during driographic printing, only ink is supplied to the master.

Printing masters are generally obtained by the image-wise exposure and processing of an imaging material called plate precursor. In addition to the well-known photosensitive, so-called pre-sensitized plates, which are suitable for UV contact exposure through a film mask, also heat-sensitive printing plate precursors have become very popular in the late 1990s. Such thermal materials offer the advantage of daylight stability and are especially used in the so-called computer-to-plate method wherein the plate precursor is directly exposed, i.e. without the use of a film mask. The material is exposed to heat or to infrared light and the generated heat triggers a (physico-)chemical process, such as ablation, polymerization, insolubilization by cross linking of a polymer, heat-induced solubilization, or particle coagulation of a thermoplastic polymer latex.

The most popular thermal plates form an image by a heat-induced solubility difference in an alkaline developer between exposed and non-exposed areas of the coating. The coating typically comprises an oleophilic binder, e.g. a phenolic resin, of which the rate of dissolution in the developer is either reduced (negative working) or increased (positive working), by the image-wise exposure. During processing, the solubility differential leads to the removal of the non-image (non-printing) areas of the coating, thereby revealing the hydrophilic support, while the image (printing) areas of the coating remain on the support. Typical examples of such plates are described in e.g. EP 625 728, EP 823 327, EP 825 927, EP 864 420, EP 894 622 and EP 901 902. Negative working embodiments of such thermal materials often require a pre-heat step between exposure and development as described in e.g. EP 625 728.

Negative working plate precursors which do not require a pre-heat step may contain an image-recording layer that works by heat-induced particle coalescence of a thermoplastic polymer latex, as described in e.g. EP 770 494, EP 770 495, EP 770 496 and EP 770 497. These patents disclose a method for making a lithographic printing plate comprising the steps of (1) image-wise exposing an imaging element comprising thermoplastic polymer particles dispersed in a hydrophilic binder and a compound capable of converting light into heat and (2) developing the image-wise exposed element by applying fountain and/or ink.

EP 1 342 568 describes a method of making a lithographic printing plate comprising the steps of (1) image-wise exposing an imaging element comprising thermoplastic polymer particles dispersed in a hydrophilic binder and a compound capable of converting light into heat and (2) developing the image-wise exposed element by applying a gum solution, thereby removing non-exposed areas of the coating from the support.

EP 1 614 539 and EP 1 614 540 describe a method of making a lithographic printing plate comprising the steps of (1) image-wise exposing an imaging element disclosed in EP 1 614 538 and (2) developing the image-wise exposed element by applying an aqueous, alkaline solution.

WO 2010/031758 discloses a lithographic printing plate precursor with an improved sensitivity including a coating containing thermoplastic polymer particles and an infrared radiation absorbing containing a substituent selected from bromo and iodo.

A problem associated with plate precursors that work according to the mechanism of heat-induced latex coalescence is that it is difficult to obtain both a high sensitivity enabling exposure at a low energy density, and a good clean-out of the unexposed areas during development - i.e. the complete removal of the non-exposed areas during the development step. The energy density that is required to obtain a sufficient degree of latex coalescence and of adherence of the exposed areas to the support is often higher than 250 mJ/cm². As a result, in platesetters that are equipped with low power exposure devices such as semiconductor infrared laser diodes, such materials require long exposure times. Also, when a low power exposure device is used, the extent of coalescence is often low and the exposed areas may degrade rapidly during the press run and as a result, a low press life is obtained. Therefore, there is still a need for heat-sensitive lithographic printing plates based on latex coalescence which have excellent printing properties - such as high image quality and no toning - combined with a long press life.

### SUMMARY OF THE INVENTION

It is an object of the present invention to provide new thermoplastic polymer particles and a negative working, heat-sensitive lithographic printing plate precursor that works according to the mechanism of heat-induced latex coalescence having both a high press life and excellent printing properties.

The objects are realized by claims 1 and 9 respectively, i.e. thermoplastic polymer particles as defined in claim 1 characterized in that the polymer particles include at least one polymer comprising a monomeric unit including an oxalylamido moiety; and a heat-sensitive negative-working lithographic printing plate precursor as defined in claim 9 which comprises these thermoplastic polymer particles.

It was surprisingly found that synthesis of thermoplastic polymer particles including a polymer comprising a monomeric unit including an oxalylamido moiety results in significant smaller particles compared to a similar synthesis of thermoplastic polymer particles of the prior art. Without being bound to any theoretical explanation, it is believed that due to hydrogen bond formation during the synthesis of the polymer particles, i.e. intra-latex interaction, the growing polymer becomes faster insoluble in water and causes a faster particle nucleation resulting in smaller particles sizes. As a result, a better shelf-life stability and consequently a better clean-out may be obtained. In addition, after thermal imaging also hydrogen bonds may be formed between the latex particles and/or a binder, if present, i.e. inter-latex interaction. It is believed that both inter-latex and intra-latex hydrogen bonds can contribute to a higher robustness of the printing plate and thus a higher press life.

Other features, elements, steps, characteristics and advantages of the present invention will become more apparent from the following detailed description of preferred embodiments of the present invention. Specific embodiments of the invention are also defined in the dependent claims.

### DETAILED DESCRIPTION OF THE INVENTION

### Thermoplastic polymer particles

The thermoplastic polymer particles, also referred to herein as "latex particles", comprise at least one polymer including an oxalylamido moiety. The thermoplastic polymer particles are preferably hydrophobic. The polymer including an oxalylamido moiety is further also referred to as the "oxalylamido polymer".

The oxalylamido moiety is preferably represented by structure I: 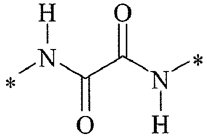 wherein
* denotes the linking positions to the rest of the polymer.

The oxalylamido polymer contains preferably at least 2%wt of monomeric units including an oxalylamido moiety, more preferably at least 10 %wt, and most preferably at least 15%wt. Alternatively, the polymer preferably contains between 2%wt and 40%wt monomeric units including an oxalylamido moiety, more preferably between 4%wt and 30%wt and most preferably between 5%wt and 20%wt.

The monomeric unit including an oxalylamido moiety is more preferably represented by structure II: 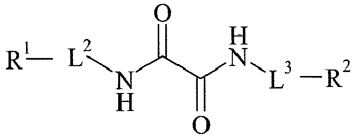
wherein R¹ represents a group including a free radical polymerisable group;
R² represents a terminal group; and
L² and L³ independently represent a divalent linking group.

The free radical polymerisable group is preferably represented by an ethylenical unsaturated group such as an optionally substituted acrylate, methacrylate, acrylamide, methacrylamide, maleimide, styryl or vinyl group.

An acrylate and methacrylate group are particularly preferred. The optional substituents may represent a halogen such as a fluorine, chlorine, bromine or iodine atom, an alkoxy group such as a methoxy or ethoxy group or an alkyl group such as a methyl, ethyl, propyl or isopropyl group.

The terminal group R² is preferably represented by hydrogen, an optionally substituted alkyl or cycloalkyl group, an optionally substituted aryl group, an optionally substituted aralkyl group or an optionally substituted heteroaryl group.

The divalent linking groups L² and L³ are preferably independently selected from an optionally substituted alkylene, cycloalkylene, arylene, or heteroarylene, -O-, -CO-, -CO-O-, -O-CO-, -CO-NH-, -NH-CO-, -NH-CO-O-, -O-CO-NH-, -NH-CO-NH-, -NH-CS-NH-, -CO-NR'-, -NR"-CO-, -NH-CS-NH-, -SO-, -SO₂-, -SO₂-NH-, - NH-SO₂-, -CH=N-, -NH-NH-, -N⁺(CH₃)₂-, -S-, -S-S-, and/or combinations thereof, wherein R and R each independently represent an optionally substituted alkyl, aryl, or heteroaryl. The substituents optionally present on the alkylene, the cyloalkylene, the arylene or the heteroarylene group may be represented by an alkyl group such as a methyl, ethyl, propyl or isopropyl group, substituents including for example oxygen or sulfur; a halogen such as a fluorine, chlorine, bromine or iodine atom; a hydroxyl group; an amino group; an alkoxy group such as a methoxy or ethoxy group or a (di)alkylamino group.

More preferably, the divalent linking groups L² and L³ independently represent a divalent aliphatic group including straight or branched carbon chain(s) or alicyclic, non-aromatic ring(s). Optionally the aliphatic linking group may contain substituents including for example oxygen or sulfur; alkyl groups such as a methyl, ethyl, propyl or isopropyl group and halogens such as a fluorine, chlorine, bromine or iodine atom.

Most preferably, linking groups L² and L³ independently represent an optionally substituted alkylene or cycloalkylene group. The substituents optionally present on the alkylene or cycloalkylene group may be represented by an alkyl group such as a methyl, ethyl, propyl or isopropyl group or a halogen such as a fluorine, chlorine, bromine or iodine atom.

In a most preferred embodiment, the monomeric unit including an oxalylamido moiety is represented by structure III: 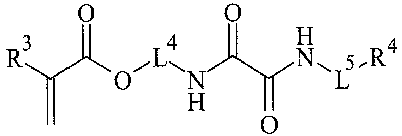 wherein R³ and R⁴ independently represent a terminal group; and L⁴ and L⁵ independently represent an optionally substituted divalent linking group.

The optionally substituted divalent linking groups L⁴ and L⁵ preferably independently represent a group as described above for the divalent linking groups L² and L³.

The terminal groups R³ and R⁴ are preferably represented by hydrogen, an optionally substituted alkyl or cycloalkyl group, an optionally substituted aryl group, an optionally substituted aralkyl group or an optionally substituted heteroaryl group.

Suitable alkyl groups include 1 or more carbon atoms such as for example C₁ to C₂₂-alkyl groups, more preferably C₁ to C₁₂-alkyl groups and most preferably C₁ to C₆-alkyl groups. The alkyl group may be lineair or branched such as for example methyl, ethyl, propyl (n-propyl, isopropyl), butyl (n-butyl, isobutyl, t-butyl), pentyl, 1,1-dimethyl-propyl, 2,2-dimethylpropyl and 2-methyl-butyl, or hexyl.

Suitable cycloalkyl groups are non-aromatic, homocyclic groups containing carbon atoms and may be monocyclic- or polycyclic. Examples include cyclopentyl, cyclohexyl or adamantyl.

Suitable aryl groups include for example phenyl, naphthyl, benzyl, tolyl, ortho- meta- or para-xylyl, anthracenyl or phenanthrenyl.

Suitable aralkyl groups include for example phenyl groups or naphthyl groups including one, two, three or more C₁ to C₆-alkyl groups.

Suitable heteroaryl groups are preferably monocyclic- or polycyclic aromatic rings comprising carbon atoms and one or more heteroatoms in the ring structure. Preferably 1 to 4 heteroatoms independently selected from nitrogen, oxygen, selenium and sulphur and/or combinations thereof. Examples include pyridyl, pyrimidyl, pyrazoyl, triazinyl, imidazolyl, (1,2,3,)- and (1,2,4)-triazolyl, tetrazolyl, furyl, thienyl, isoxazolyl, thiazolyl and carbazoyl.

More preferably R³ and R⁴ are independently represented by hydrogen or an optionally substituted alkyl, aryl or aralkyl group, and/or combination thereof.

Most preferably, R³ and R⁴ independently represent hydrogen or methyl.

The alkyl, cycloalkyl, aralkyl, aryl or heteroaryl groups may include one or more substituents. The optional substituents on the alkyl, cycloalkyl, aralkyl, aryl or heteroaryl groups are preferably selected from an alkyl group such as a methyl, ethyl, n-propyl, isopropyl, n-butyl, 1-isobutyl, 2-isobutyl and tertiary-butyl group; an ester, amide, ether, thioether, ketone, aldehyde, sulfoxide, sulfone, sulfonate ester or sulphonamide group, a halogen such as fluorine, chlorine, bromine or iodine, -OH, -SH, -CN and -NO₂, and/or combinations thereof.

The alkylene group as referred to in the above paragraphs is preferably represented by -(CH₂)ₚ- wherein p represents 1, or an integer greater than 1, preferably an integer selected from to 1 to 20, more preferably p represents an integer selected from 1 to 10, most preferably p represents an integer selected from 2, 3, 4, 5 or 6.

Suitable Examples of monomeric units including an oxalylamido moiety are given below in Table A. Further suitable monomeric units including an oxalylamido moiety are disclosed in WO2014/198820 in paragraph [0041].

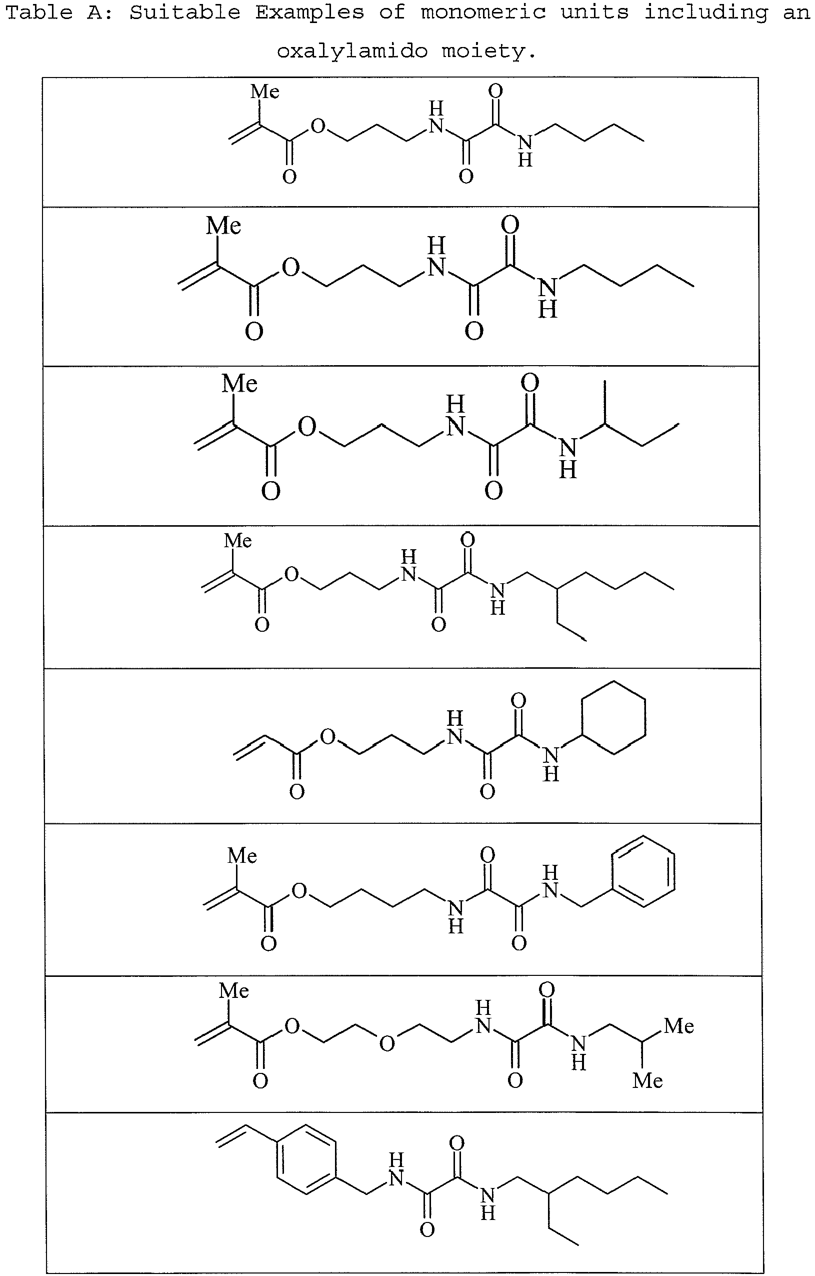

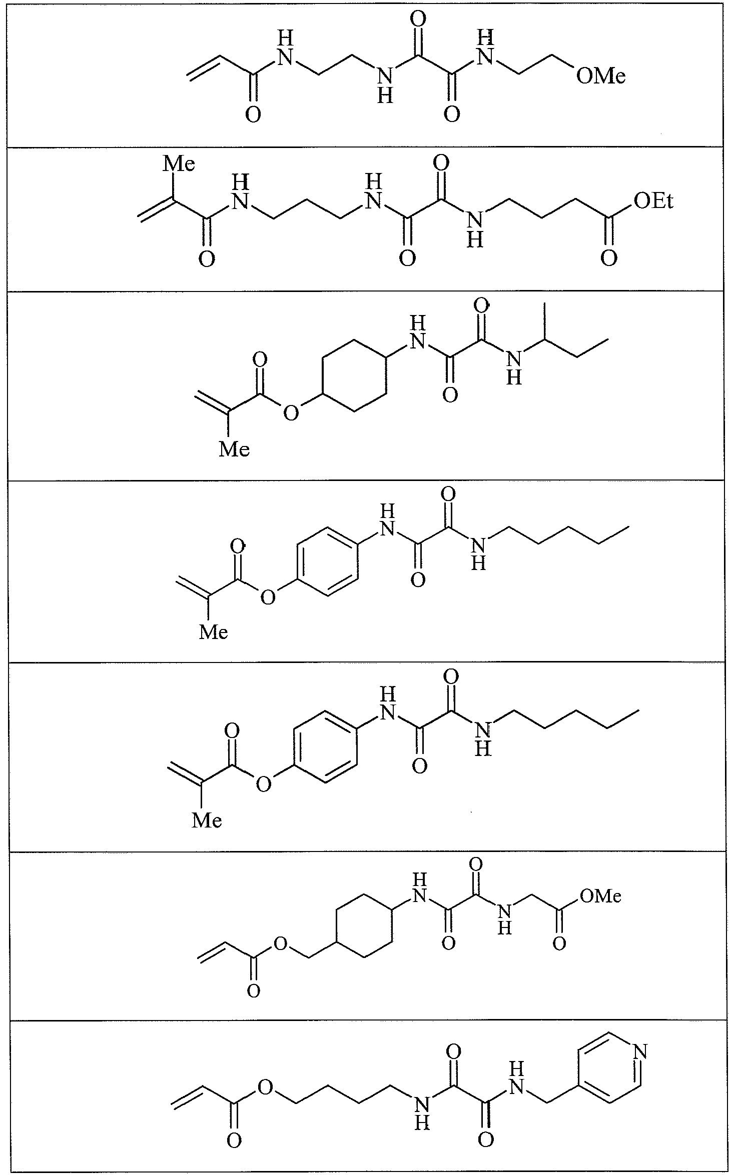

The thermoplastic polymer particles preferably have an average particle diameter of more than 10nm and less than 200nm, more preferably more than 15nm and less than 50nm, and most preferably more than 25nm and less than 35nm. The average particle diameter referred to in the current application is defined as the average particle diameter measured by Photon Correlation Spectrometry (Ø_{PCS}), also known as Quasi-Elastic or Dynamic Light-Scattering. The measurements were performed according the ISO 13321 procedure (first edition, 1996-07-01) with a Brookhaven BI-90 analyzer, commercially available from Brookhaven Instrument Company, Holtsville, NY, USA.

The particle size of the latex can be controlled by the level of surfactant(s) and/or initiator used during their preparation. Smaller particle sizes are generally preferred and can be obtained by using higher levels of surfactants. Also the latex preparation method - the more particles formed during the preparation, the smaller the resulting average particle size -, and the monomer type and its water solubility may influence the particle size.

The oxalylamido polymer further includes at least one monomeric unit derived from monomers selected from ethylene, vinyl)chloride, methyl(meth)acrylate, ethyl (meth)acrylate, vinylidene chloride, (meth)acrylonitrile, vinyl-carbazole and/or styrene or derivatives thereof. More preferably, the oxalylamido polymer further includes styrene or derivatives thereof, or mixtures comprising styrene and (meth)acrylonitrile or derivatives thereof. The oxalylamido polymer may comprise at least 50%wt of styrene, more preferably at least 65%wt of styrene. In order to obtain sufficient resistivity towards organic chemicals such as hydrocarbons used in e.g. plate cleaners, the oxalylamido polymer preferably further comprises at least 5%wt, more preferably at least 30%wt, of nitrogen containing units, such as (meth)acrylonitrile, as described in EP 1 219 416. According to the most preferred embodiment, the oxalylamido polymer further comprises styrene and acrylonitrile units in a weight ratio between 1:1 and 5:1 (styrene:acrylonitrile), e.g. in a 2:1 ratio.

The weight average molecular weight of the thermoplastic polymer particles may range from 5,000 to 3,000,000 g/mol, more preferably from 10,000 to 1,000,000. The thermoplastic polymer particles may be partially crosslinked and then they have a molecular weight significantly higher than 3.000.000 g/mol.

Preferred preparation methods of the thermoplastic polymer particles are disclosed in for example EP 1 859 935 in paragraphs [0028] and [0029].

The thermoplastic polymer particles can be prepared by addition polymerization or by condensation polymerization. They are preferably applied onto the lithographic base in the form of a dispersion in an aqueous coating liquid, also referred to as aqueous coating composition. These water based dispersions can be prepared by polymerization in a water-based system e.g. by free-radical emulsion polymerization as described in US 3,476,937 or EP 1 217 010 or by means of dispersing techniques of the water-insoluble polymers into water. Another method suitable for preparing an aqueous dispersion of the thermoplastic polymer particles comprises:
- dissolving the thermoplastic polymer in an organic water immiscible solvent,
- dispersing the thus obtained solution in water or in an aqueous medium and removing the organic solvent by evaporation.

Emulsion polymerization is typically carried out through controlled addition of several components - i.e. vinyl monomers, surfactants (dispersion aids), initiators and optionally other components such as buffers or protective colloids - to a continuous medium, usually water. The result of the emulsion polymerization is a dispersion of discrete polymer particles in water. The surfactants or dispersion aids which are present in the reaction medium have a multiple role in the emulsion polymerization: (i) they reduce the interfacial tension between the monomers and the aqueous phase, (ii) they provide reaction sites through micelle formation in which the polymerization occurs and (iii) they stabilize the growing polymer particles and ultimately the latex emulsion. The surfactants are absorbed at the water/polymer interface and thereby prevent coagulation of the fine polymer particles. Both non-ionic and anionic surfactants are preferably used in emulsion polymerization; anionic surfactants being more preferred as they may result in smaller latex particle sizes. They can also be used as a mixture of surfactants.

Anionic surfactants are typically absorbed on the latex particle and surround the particle with a charged double layer deriving from their anionic end groups and the positively charged counterions. This double layer on the surface of the polymer particles provides an energy barrier which stabilizes the emulsion by preventing coagulation of the particles. The surfactant is preferably represented by R'-SO₄ X⁺, R"-SO₃ X⁺, R"'-PO₄H⁻ X⁺, R""-COO⁻X⁺ wherein R', R", R"' and R"" independently represent a straight or branched alkyl group having at least 10 carbon atoms, an aryl or heteroaryl group substituted with at least one straight or branched alkyl group having at least 10 carbon atoms or a polyether group which comprises at least one straight or branched alkyl group having at least 10 carbon such as an alkyl substituted polyalkylene-oxide group, and X⁺ represents a cation such as Na⁺ or NH4⁺. The polyalkylene-oxide group may comprise a plurality of alkylene-oxide recurring units of the formula -CₙH₂ₙ-O- wherein n is preferably an integer in the range 2 to 7. Preferred alkylene-oxide recurring units are typically ethylene oxide, propylene oxide or mixtures thereof. The number of the recurring units range preferably between 2 and 10 units, more preferably between 2 and 5 units, and preferably less than 100, more preferably less than 60. Specific examples of suitable anionic surfactants include sodium lauryl sulphate, sodium lauryl ether sulphate, sodium dodecylbenzene sulphonate, sodium lauryl phosphate and alkyl diphenyl ether sulphonates.

Examples of nonionic surfactants include alkyl alkoxylates, i.e. alkyl ethoxylates, and alkyl polyglycidyl surfactants (APG).

### Lithographic printing plate precursor

The lithographic printing plate precursor according to the present invention comprises a heat and/or light sensitive coating and is negative-working, i.e. after exposure and development the unexposed areas of the coating are removed from the support and define hydrophilic (non-printing) areas, whereas the exposed coating is not removed from the support and defines oleophilic (printing) areas.

The lithographic printing plate precursor comprises a coating including the novel latex, i.e. the polymer comprising a monomeric unit inluding an oxalylamido moiety. The coating may comprise one or more layer(s). The layer of the coating comprising the thermoplastic polymer particles is referred to herein as the image-recording layer. In a preferred embodiment, the coating consists of the image-recording layer only. The coating may be applied on the support by any coating technique known in the art. After applying the coating, the applied layer(s) are dried as commonly known in the art.

The amount of thermoplastic polymer particles present in the imaging layer is at least 55%wt, preferably at least 60%wt, more preferably at least 65%wt, relative to the weight of all the ingredients in the image-recording layer.

### Infrared absorbing dyes

The coating preferably also contains a compound which absorbs infrared light and converts the absorbed energy into heat. The amount of infrared absorbing agent in the coating is preferably between 0.25 and 25.0%wt, more preferably between 0.5 and 20.0%wt. In a most preferred embodiment, its concentration is at least 6 %wt, more preferred at least 8%wt, relative to the total weight of the ingredients of the image-recording layer. As described in EP 1 859 936, the amount of infrared dye may be adjusted to the particle size of the thermoplastic particles. The infrared absorbing compound can be present in the image-recording layer and/or an optional other layer. Preferred IR absorbing compounds are dyes such as cyanine, merocyanine, indoaniline, oxonol, pyrilium and squarilium dyes or pigments such as carbon black. Examples of suitable IR absorbers are described in e.g. EP 823 327, EP 978 376, EP 1 029 667, EP 1 053 868, EP 1 093 934; WO 97/39894, EP 2 243 628, EP 2 328 753 and WO 00/29214. Other preferred IR-dyes are described in EP 1 614 541 (page 20 line 25 to page 44 line 29), EP 1 736 312 (paragraphs [0008] to [0021]), EP 1 910 082, EP 2 234 964 and EP 2 072 570. The latter IR-dyes are especially preferred in the on-press development embodiment of this invention since these dyes give rise to a print-out image after exposure to IR-light, prior to development on press. IR-dyes preferably used in this invention are water compatible, most preferably water soluble.

A preferred compound is the following cyanine dye IR-1 or a suitable salt thereof:

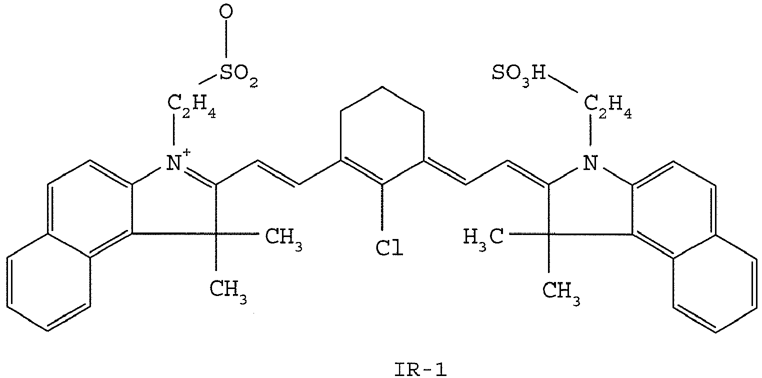

### Binder

The coating may further contain a hydrophilic binder. The hydrophilic binder is preferably present in the image-recording layer. Examples of suitable hydrophilic binders are homopolymers and copolymers of vinyl alcohol,(meth)acrylamide, methylol (meth)acrylamide, (meth)acrylic acid, hydroxyethyl (meth)acrylate, maleic anhydride/vinylmethylether copolymers, copolymers of (meth)acrylic acid or vinylalcohol with styrene sulphonic acid.

Preferably, the hydrophilic binder comprises polyvinylalcohol or polyacrylic acid.

The amount of hydrophilic binder may be between 2%wt and 30%wt, preferably between 2%wt and 20%wt, more preferably between 3%wt and 10%wt relative to the total weight of all ingredients of the coating. The amount of the thermoplastic polymer particles relative to the amount of the binder is preferably between 4%wt and 15%wt, more preferably between 5%wt and 12%wt, most preferably between 6%wt and 10%wt.

### Other ingredients

Colorants, such as dyes or pigments, which provide a visible color to the coating and remain in the exposed areas of the coating after the processing step, may be added to the coating. The image-areas, which are not removed during the processing step, form a visible image on the printing plate and inspection of the lithographic image on the developed printing plate becomes feasible. Typical examples of such contrast dyes are the amino-substituted tri- or diarylmethane dyes, e.g. crystal violet, methyl violet, victoria pure blue, flexoblau 630, basonylblau 640, auramine and malachite green. Also the dyes which are discussed in depth in the detailed description of EP 400 706 are suitable contrast dyes. In a preferred embodiment, anionic tri- or diarylmethane dyes are used. Dyes which, combined with specific additives, only slightly color the coating but which become intensively colored after exposure, as described in for example WO2006/005688 are also of interest. Other preferred contrast dyes are those described in EP 1 914 069. Pigments of interest are phtalocyanine and quinacridones pigments such as for example Heliogen Blau commercially available from BASF and PV23 (IJX1880) commercially available from Cabot Corporation.

Typical contrast dyes may be combined or even replaced by infrared dyes capable of forming a visible colour upon exposure to infrared radiation, as described above.

The coating may further comprise a light stabiliser and/or anti-oxidant. Suitable light stabilizers and/or antioxidants are steric hindered phenoles, hindered amine light stabilizers (HALS) and their N-oxyl radicals, tocopheroles, hydroxyl amine derivatives, such as hydroxamic acids and substituted hydroxylamines, hydrazides, thioethers or trivalent organophosphor compounds such as phosphites and reductones. Preferably, the light stabilizer is a reductone. In a particular preferred embodiment, the coating comprises a phenolic compound containing a phenolic ring having at least one substituent according to Formula V (see below) and optional additional substituents having a Hammett sigma para-value (σₚ) less than or equal to 0.3. The phenolic compound preferably contains phenol, naphtol or a hydroxy substituted indole. Preferred substituents having a Hammett sigma para-value (σₚ) less than or equal to 0.3 are for example an optionally substituted alkyl or aryl group, a halogen, an alkoxy group, a thioether, an amino group and a hydroxyl group.

The substituent acccording to Formula V has the following structure: 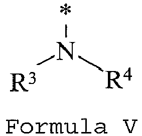 wherein
* is a linking position to the aromatic ring of the phenolic compound; and
R³ and R⁴ are independently represented by hydrogen, an optionally substituted alkyl group, an optionally substituted alkenyl group, an optionally substituted alkynyl group, an optionally substituted alkaryl group, an optionally substituted aralkyl group and an optionally substituted aryl or heteroaryl group;
R³ and R⁴ may represent the necessary atoms to form a five to eight membered ring, with the proviso that R³ and R⁴ are bonded to N via a carbon-nitrogen bond;
any of R³ and R⁴ together with N and the phenolic ring may represent the necessary atoms to form a five or six membered ring.

Optionally, the coating may further contain additional ingredients. For example, additional binders, polymer particles such as matting agents and spacers, surfactants such as perfluorosurfactants, silicon or titanium dioxide particles, development inhibitors, development accelerators, colorants, metal complexing agents are well-known components of lithographic coatings.

Preferably the coating comprises an organic compound, including at least one phosphonic acid group or at least one phosphoric acid group or a salt thereof, as described in EP 1 940 620. These compounds may be present in the coating in an amount between 0.05 and 15%wt, preferably between 0.5 and 10%wt, more preferably between 1 and 5 %wt relative to the total weight of the ingredients of the coating.

The ingredients present in the coating as described above may be present in the image-recording layer or in an optional other layer.

### Additional layers

To protect the surface of the coating, in particular from mechanical damage, a protective layer may optionally be applied on the image-recording layer. The protective layer generally comprises at least one water-soluble polymeric binder, such as polyvinyl alcohol, polyvinylpyrrolidone, partially hydrolyzed polyvinyl acetates, gelatin, carbohydrates or hydroxyethylcellulose. The protective layer may contain small amounts, i.e. less then 5 % by weight, of organic solvents. The thickness of the protective layer is not particularly limited but preferably is up to 5.0 µm, more preferably from 0.05 to 3.0 µm, particularly preferably from 0.10 to 1.0 µm.

### Support

The support of the lithographic printing plate precursor has a hydrophilic surface or is provided with a hydrophilic layer. The support may be a sheet-like material such as a plate or it may be a cylindrical element such as a sleeve which can be slid around a print cylinder of a printing press.

In one embodiment of the invention the support is a metal support such as aluminum or stainless steel. The support can also be a laminate comprising an aluminum foil and a plastic layer, e.g. polyester film. A particularly preferred lithographic support is an aluminum support. Any known and widely used aluminum materials can be used. The aluminum support has a thickness of about 0.1-0.6 mm. However, this thickness can be changed appropriately depending on the size of the printing plate used and the plate setters on which the printing plate precursors are exposed.

To optimize the lithographic properties, the aluminum support is preferably subjected to several treatments well known in the art such as for example degrease, surface roughening, etching, anodization, sealing and/or surface treatment. In between such treatments, a neutralization treatment is often carried out. A detailed description of these treatments can be found in e.g. EP 1 142 707, EP 1 564 020 and EP 1 614 538.

The surface roughness of the support, expressed as arithmetical mean center-line roughness Ra (measured with a Perthometer following ISO 4288 and ISO 3274, needle geometry 2/60° and 15 mg load), may vary between 0.05 and 1.5 µm. The aluminum substrate of the current invention has preferably a Ra value between 0.15 µm and 0.45 µm, more preferably between 0.20 µm and 0.40 µm and most preferably between 0.25 µm and 0.38 µm. The lower limit of the Ra value is preferably about 0.10 µm. More details concerning the preferred Ra values of the surface of the grained and anodized aluminum support are described in EP 1 356 926.

A preferred aluminum substrate, characterized by an arithmetical mean center-line roughness Ra less then 0.45 µ is described in EP 1 356 926.

Optimizing the pore diameter and distribution thereof of the grained and anodized aluminum surface as described in EP 1 142 707 and US 6,692,890 may enhance the press life of the printing plate and may improve the toning behaviour. Avoiding large and deep pores as described in US 6,912,956 may also improve the toning behaviour of the printing plate. An optimal ratio between pore diameter of the surface of the aluminium support and the average particle size of the thermoplastic polymer particles may enhance the press life of the plate and may improve the toning behaviour of the prints. This ratio of the average pore diameter of the surface of the aluminium support to the average particle size of the thermoplastic polymer particles present in the image-recording layer of the coating, preferably ranges from 0.05:1 to 0.8:1, more preferably from 0.10:1 to 0.35:1.

By anodising the aluminum support, its abrasion resistance and hydrophilic nature are improved. The microstructure as well as the thickness of the Al₂O₃ layer are determined by the anodising step, the anodic weight (g/m² Al₂O₃ formed on the aluminium surface) varies between 1 and 8 g/m². The anodic weight is preferably between 2.5 g/m² and 5.5 g/m², more preferably 3.0 g/m² and 5.0 g/m² and most preferably 3.5 g/m² and 4.5 g/m².

The grained and anodized aluminum support may be subject to a so-called post-anodic treatment to improve the hydrophilic character of its surface. More detailed descriptions of these treatments are given in GB 1 084 070, DE 4 423 140, DE 4 417 907, EP 659 909, EP 537 633, DE 4 001 466, EP 292 801, EP 291 760 and US 4,458,005. Post-anodic treatment of a grained and anodized support with a polyvinylmethylphosphonic acid solution having a pH of 2 or lower provides printing plates with a highly improved clean out behaviour.

According to another embodiment, the support can also be a flexible support, which is provided with a hydrophilic layer. The flexible support is e.g. paper, plastic film, thin aluminum or a laminate thereof. Preferred examples of plastic film are polyethylene terephthalate film, polyethylene naphthalate film, cellulose acetate film, polystyrene film, polycarbonate film, etc. The plastic film support may be opaque or transparent. Particular examples of suitable hydrophilic layers that may be supplied to a flexible support for use in accordance with the present invention are disclosed in EP 601 240, GB 1 419 512, FR 2 300 354, US 3,971,660; US 4,284,705; EP 1 614 538, EP 1 564 020 and US 2006/0019196.

### Exposure step

The printing plate precursors of the present invention can be exposed to infrared light by means of e.g. LEDs or an infrared laser. Preferably lasers, emitting near infrared light having a wavelength in the range from about 700 to about 1500 nm, e.g. a semiconductor laser diode, a Nd:YAG or a Nd:YLF laser, are used. Most preferably, a laser emitting in the range between 780 and 830 nm is used. The infrared light is converted into heat by an IR-dye as discussed above. The required laser power depends on the sensitivity of the image-recording layer, the pixel dwell time of the laser beam, which is determined by the spot diameter (typical value of modern plate-setters at 1/e² of maximum intensity : 10-25 µm), the scan speed and the resolution of the exposure apparatus (i.e. the number of addressable pixels per unit of linear distance, often expressed in dots per inch or dpi; typical value : 1000-4000 dpi).

Preferred lithographic printing plate precursors according to the present invention produce a useful lithographic image upon image-wise exposure with IR-light having an energy density, measured at the surface of said precursor, of 200 mJ/cm² or less, more preferably of 180 mJ/cm² or less, even more preferably of 165 mJ/cm² or less, and most preferably of 150 mJ/cm² or less. With a useful lithographic image on the printing plate, 2 % dots (at 200 lpi) are perfectly visible on at least 1000 prints on paper. Exposure is preferably carried out with commercially available platesetters.

Two types of laser-exposure apparatuses are commonly used: internal (ITD) and external drum (XTD) platesetters. ITD platesetters for thermal plates are typically characterized by a very high scan speed up to 1500 m/sec and may require a laser power of several Watts. The Agfa Galileo T (trademark of Agfa Gevaert N.V.) is a typical example of a plate-setter using the ITD-technology. XTD platesetters for thermal plates having a typical laser power from about 20 mW to about 500 mW operate at a lower scan speed, e.g. from 0.1 to 20 m/sec. The Agfa Xcalibur, Accento and Avalon platesetter families (trademark of Agfa Gevaert N.V.) make use of the XTD technology.

As an alternative, the printing plate precursor may be imagewise heated by a heating element to form an image.

Due to the heat generated during the exposure step, the thermoplastic polymer particles may fuse or coagulate so as to form a phase which corresponds to the printing areas of the printing plate. Coagulation may result from heat-induced coalescence, softening or melting of the thermoplastic polymer particles. The particle size determines to a large extent the sensitivity for latex coagulation. There is no specific upper limit to the coagulation temperature of the thermoplastic polymer particles, however the temperature should be sufficiently below the decomposition temperature of the polymer particles. Preferably the coagulation temperature is at least 10°C below the temperature at which the decomposition of the polymer particles occurs. The coagulation temperature is preferably higher than 50°C, more preferably above 100°C.

### Development

In the development step after the exposure step, the non-exposed areas of the image-recording layer are at least partially removed without essentially removing the exposed areas, i.e. without affecting the exposed areas to an extent that renders the ink-acceptance of the exposed areas unacceptable.

The printing plate precursor may be developed off-press by means of a suitable processing liquid. The processing liquid can be applied to the plate e.g. by rubbing with an impregnated pad, by dipping, immersing, (spin-)coating, spraying, pouring-on, either by hand or in an automatic processing apparatus. The treatment with a processing liquid may be combined with mechanical rubbing, e.g. by a rotating brush. The developed plate precursor can, if required, be post-treated with rinse water, a suitable correcting agent or preservative as known in the art. During the development step, any water-soluble protective layer present is preferably also removed. Suitable processing liquids are plain water, an alkaline solution or an aqueous solution. In a preferred embodiment, the processing liquid is a gum solution. A suitable gum solution which can be used in the development step is described in for example EP 1 342 568 and WO 2005/111727. The development is preferably carried out at temperatures of from 20 to 40°C in automated processing units as customary in the art. The development step may be followed by a rinsing step and/or a gumming step.

In another embodiment, the printing plate precursor is after exposure mounted on a printing press and developed on-press by supplying ink and/or fountain or a single fluid ink to the precursor. Alternatively, development off press with e.g. a gumming solution, wherein the non-exposed areas of the image-recording layer are partially removed, may be combined with a development on-press, wherein a complete removal of the non-exposed areas is realised.

### Post treatment

The plate precursor may be post-treated with a suitable correcting agent or preservative as known in the art. To increase the resistance of the finished printing plate and hence to extend the press life, the layer can be heated to elevated temperatures (so called 'baking'). The plate can be dried before baking or is dried during the baking process itself. During the baking step, the plate can be heated at a temperature which is higher than the glass transition temperature of the thermoplastic particles. The baking period is preferably more than 15 seconds, more preferably more than 20 seconds and most preferably the baking period is less than 2 minutes. A preferred baking temperature is above 60°C, more preferably above 100°C. For example, the exposed and developed plates can be baked at a temperature of 230°C to 250°C for about 30 seconds to 1.5 minutes. Baking can be done in conventional hot air ovens or by irradiation with lamps emitting in the infrared or ultraviolet spectrum. As a result of this baking step, the resistance of the printing plate to plate cleaners, correction agents and UV-curable printing inks increases. A baking process as disclosed in EP 1 767 349 may also be applied in the present invention.

### Printing

The printing plate thus obtained can be used for conventional, so-called wet offset printing, in which ink and an aqueous dampening liquid is supplied to the plate. Another suitable printing method uses so-called single-fluid ink without a dampening liquid. Suitable single-fluid inks have been described in US 4,045,232; US 4,981,517 and US 6,140,392. In a most preferred embodiment, the single-fluid ink comprises an ink phase, also called the or oleophilic phase, and a polyol phase as described in WO 00/32705.

### EXAMPLES

All materials used in the following examples were readily available from standard sources such as Sigma-Aldrich (Belgium) and Acros (Belgium) unless otherwise specified. The latex particles used in the Examples are illustrative to the invention; the monomers may be chemically modified and/or used in different molar ratio's.

### 1. Preparation of the lithographic substrate S-01

A 0.3 mm thick aluminum foil was degreased by dipping in an aqueous solution containing 10 g/l NaOH at 50°C for 15 seconds and rinsed with demineralised water for 5 seconds followed by a rinsing with a diluted HCl solution with a conductivity of 100 mS. The foil was then electrochemically grained using an alternating current (50 Hz) in an aqueous solution containing 10.5 g/l HCl and 15 g/l HOAc at a temperature of 30°C and a current density of 35 A/dm² and a total charge density of 500 C/dm². Afterwards, the aluminum foil was rinsed with demineralised water and partially desmutted by etching with an aqueous solution containing 70 g/l of phosphoric acid at 35°C for 20 seconds and rinsed with demineralised water for 5 seconds. The foil was subsequently subjected to anodic oxidation during 15 seconds in an aqueous solution containing 145 g/l of sulphuric acid at a temperature of 45°C and a current density of 20 A/dm² (charge density of 350 c/dm²), then washed with demineralised water. The post treatment is done (by dipping) with a solution containing 2.0 g/l PVPA at 70°C. After the dipping process, the supports are rinsed with demineralised water for 10 seconds and dried at 25°C for 1 hour.

The support S-01 thus obtained is characterised by a surface roughness Ra of 0.28-0.35 µm (measured with a Perthometer following ISO 4288 and ISO 3274, needle geometry 2/60° and 15 mg load), an anodic weight of about 4.0 g/m² and an 1976 CIE 1976 L*-value of 72.5 (measured with a Gretag Macbeth SpectroEye with the settings: D50 (illuminant), 2° Observer, No filter).

### 2. Preparation of the inventive latex dispersions

The thermoplastic polymer particles including an oxalylamido moiety are prepared as described below by means of an emulsion copolymerization. The polymer emulsion is prepared by means of a seeded emulsion polymerisation where the monomers are added in a semi-continuous way were part of the monomers are brought into the reactor together with the surfactant before the initiator is added. In Table 1, the monomers 1 and 2 including an oxalylamido moiety are given. In Table 2, the latex dispersions LD-comp and LD-01 to LD-05 are summarised.

**Table 1: oxalylamido monomers**

| Oxalylamido monomer | Chemical structure |
|---|---|
| Oxam monomer 1 | 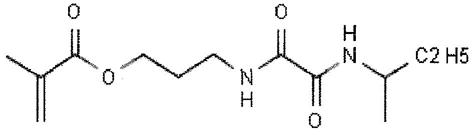 |
| | |
| 3-[[2-oxo-2-(sec-butylamino)acetyl]amino] propyl 2-methylprop-2-enoate | |
| Oxam monomer 2 | 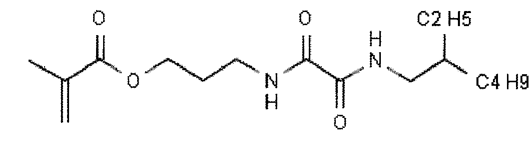 |
| | |
| 3-[[2-(2-ethylhexylamino)-2-oxo-acetyl]amino]propyl 2-methylprop-2-enoate | |

### Inventive latex dispersion LD-01

The polymer emulsion was prepared by means of a seeded emulsion polymerisation using styrene, acrylonitrile and oxam monomer 1 as monomers. The surfactant was present in the reactor before any monomer was added.

In a round bottem flask of 500 ml 1,57 g sodium dodecyl sulfate (SDS Ultra Pure commercially available from AppliChem GmbH) and 288,94 g of demineralised water was added. The reactor was flushed with nitrogen and heated until 75°C. When the reactor content reached a temperature of 75°C, 0,44 g styrene and 0,23 g acrylonitrile were added. The monomers were emulsified during 15 minutes at 75°C followed by the addition of 7.38 g of a 2% aqueous solution of sodium persulfate. Subsequently, the reaction mixture is heated for 30 minutes at 80°C. Then, the monomer mixture of 24,75 g styrene, 12,60 g acrylonitrile and 6,71 g oxam monomer 1 (see Table 1) are slowly added during 3 hours. Simultaneously with the monomer addition, 7,38 g of a 2% aqueous solution of sodium persulfate was added. After the monomer addition was completed, the reactor was heated for 60 minutes at 80°C. To reduce the amount of residual monomer a vacuum distillation was performed at 80°C during 1 hour. The reactor was subsequently cooled to room temperature and filtered using a 5 micron filter.

This resulted in a latex dispersion LD-01 with a solid content of 13.05 %wt and a pH of 3.45. The average particle size was 27 nm as measured with a Brookhaven BI-90 analyzer, commercially available from Brookhaven Instrument Company, Holtsville, NY, USA. The measurements were performed according the ISO 13321 procedure (first edition, 1996-07-01).

### Inventive latex dispersion LD-02

The polymer emulsion was prepared by means of a seeded emulsion polymerisation using styrene, acrylonitrile and oxam monomer 1 as monomers. The surfactant was present in the reactor before any monomer was added.

In a round bottem flask of 500 ml 1,57 g sodium dodecyl sulfate (SDS Ultra Pure commercially available from AppliChem GmbH) and 288,94 g of demineralised water was added. The reactor was put under inert atmosphere by flushing with nitrogen. The reactor is heated to 75°C and subsequently 1,48 g styrene and 0,75 g acrylonitrile are instaneously added. The reaction mixture is kept at 75°C for 15 minutes and subsequently 7,38 g of a 2% aqueous solution of sodium persulfate was added. Subsequently, the reaction mixture is heated for 30 minutes at 80°C. Then, the monomer mixture of 23,71 g styrene, 12,08 g acrylonitrile and 6,71 g oxam monomer 1 (see Table) are slowly added during 3 hours. Simultaneously, 7,38 g of a 2% aqueous solution of sodium persulfate was added. After addition of the monomers and persulfate solution, residual monomer was removed by vacuum distillation during 1 hour at 80 °C. Subsequently, the reaction mixture is cooled to 20 °C and filtered using a 5 micron filter.

This resulted in a latex dispersion LD-02 with a solid content of 14.07 %wt and a pH of 3.5. The average particle size was 35 nm as measured with a Brookhaven BI-90 analyzer, commercially available from Brookhaven Instrument Company, Holtsville, NY, USA. The measurements were performed according the ISO 13321 procedure (first edition, 1996-07-01).

### Inventive latex dispersion LD-03

The polymer emulsion was prepared by means of a seeded emulsion polymerisation using styrene, acrylonitrile and oxam monomer 2 as monomers. The surfactant was present in the reactor before any monomer was added.

In a round bottem flask of 500 ml 1,57 g sodium dodecyl sulfate (SDS Ultra Pure commercially available from AppliChem GmbH) and 288,94 g of demineralised water was added. The reactor was put under inert atmosphere by flushing with nitrogen. The reactor is heated to 75°C and subsequently 0,44 g styrene and 0,23 g acrylonitrile are instaneously added. The reaction mixture is kept at 75°C for 15 minutes and subsequently 7,38 g of a 2% aqueous solution of sodium persulfate was added. Subsequently, the reaction mixture is heated for 30 minutes at 80°C. Then, the monomer mixture of 27,71 g styrene, 14,11 g acrylonitrile and 2,24 g oxam monomer 2 (see Table 1) are slowly added during 3 hours. Simultaneously, 7,38 g of a 2% aqueous solution of sodium persulfate was added. After addition of the monomers and persulfate solution, residual monomer was removed by vacuum distillation during 1 hour at 80 °C. Subsequently, the reaction mixture is cooled to 20 °C and filtered using a 5 micron filter.

This resulted in a latex dispersion LD-03 with a solid content of 14.7 %wt and a pH of 3.80. The average particle size was 28 nm as measured with a Brookhaven BI-90 analyzer, commercially available from Brookhaven Instrument Company, Holtsville, NY, USA. The measurements were performed according the ISO 13321 procedure (first edition, 1996-07-01).

### Inventive latex dispersion LD-04

The polymer emulsion was prepared by means of a seeded emulsion polymerisation using styrene, acrylonitrile and oxam monomer 2 as monomers. The surfactant was present in the reactor before any monomer was added.

In a round bottem flask of 500 ml 1,57 g sodium dodecyl sulfate (SDS Ultra Pure commercially available from AppliChem GmbH) and 288,94 g of demineralised water was added. The reactor was put under inert atmosphere by flushing with nitrogen. The reactor is heated to 75°C and subsequently 0,44 g styrene and 0,23 g acrylonitrile are instaneously added. The reaction mixture is kept at 75°C for 15 minutes and subsequently 7,38 g of a 2% aqueous solution of sodium persulfate was added. Subsequently, the reaction mixture is heated for 30 minutes at 80°C. Then, the monomer mixture of 24,75 g styrene, 12,60 g acrylonitrile and 6,71 g oxam monomer 2 (see Table 1) are slowly added during 3 hours. Simultaneously, 7,38 g of a 2% aqueous solution of sodium persulfate was added. After addition of the monomers and persulfate solution, residual monomer was removed by vacuum distillation during 1 hour at 80 °C. Subsequently, the reaction mixture is cooled to 20 °C and filtered using a 5 micron filter.

This resulted in a latex dispersion LD-04 with a solid content of 12.57 %wt and a pH of 3.5. The average particle size was 31 nm as measured with a Brookhaven BI-90 analyzer, commercially available from Brookhaven Instrument Company, Holtsville, NY, USA. The measurements were performed according the ISO 13321 procedure (first edition, 1996-07-01).

### Inventive dispersion LD-05

In a round bottem flask of 500 ml 1,57 g sodium dodecyl sulfate (SDS Ultra Pure commercially available from AppliChem GmbH) and 288,94 g of demineralised water was added. The reactor was put under inert atmosphere by flushing with nitrogen. The reactor is heated to 75°C and subsequently 1,48 g styrene and 0,75 g acrylonitrile are instaneously added. The reaction mixture is kept at 75°C for 15 minutes and subsequently 7,38 g of a 2% aqueous solution of sodium persulfate was added. Subsequently, the reaction mixture is heated for 30 minutes at 80°C. Then, the monomer mixture of 26,67 g styrene, 13,59 g acrylonitrile and 2,24 g oxam monomer 2 (see Table 1) are slowly added during 3 hours. Simultaneously, 7,38 g of a 2% aqueous solution of sodium persulfate was added. After addition of the monomers and persulfate solution, residual monomer was removed by vacuum distillation during 1 hour at 80 °C. Subsequently, the reaction mixture is cooled to 20 °C and filtered using a 5 micron filter.

This resulted in a latex dispersion LD-04 with a solid content of 12.67 %wt and a pH of 3.55. The average particle size was 36 nm as measured with a Brookhaven BI-90 analyzer, commercially available from Brookhaven Instrument Company, Holtsville, NY, USA. The measurements were performed according the ISO 13321 procedure (first edition, 1996-07-01).

### 3. Preparation of the comparative latex dispersion LD-comp

In a double jacketed reactor of 10 liter is added 87,6g Dowfax 8390 (35% solids) and 6125,7g demineralised water. Under nitrogen atmosphere the reactor is heated to 75°C. As soon as the reactor reaches 75°C, 1,5% of the styrene/acrylonitrile monomer mixture is added, ie. 10,16g of styrene and 5,18g of acrylonitrile (ie 1,5% of the total amount). The reactor is heated then of 15 minutes at 75°C. Afterwards 50% of the initator solution is added, ie. 168,7 g of a 2% sodium persulfate solution in water. The reactor is heated within 30 minutes to 80°C. Then the remaining part of monomer (95% of the total amount) is added during 180 minutes, ie. 667,18 g of styrene and 339,88g of acrylonitrile. Simultaneously the remaining part of initiator solution is added (50% of the total amount), ie. 168,7 g of a 2% sodium persulfate solution in water. After the monomer and initiator addition has finished we stir the reactor for additionally 25 minutes. Then a solution of t-butyl hydroperoxide in water is added at once, ie. 7,30 g TBHP 70% in 63,90g of demineralised water. Subsequently a sodium formaldehyde sulfoxylate solution is dosed during 80 minutes, ie. 4,4g of sodium formalhyde sulfoxylate.2H₂0 dissolved in 351,7g of water. After the post-initiation is finished the reactor is stirred for another 10 minutes at 80°C and subsequently the reactor is cooled to room temperature. 100 ppm BIT is added as biocide, ie. using Proxel Clear diluted with water to 4,5 wt%.

This resulted in a latex dispersion LD-comp with a solid content of 13,5% and average particle size of 34 nm measured with a Brookhaven BI-90 analyzer, commercially available from Brookhaven Instrument Company, Holtsville, NY, USA. The measurements were performed according the ISO 13321 procedure (first edition, 1996-07-01).

**Table 2: latex dispersions LD-01 to LD-05**

| Latex dispersion | styrene monomeric units | acrylonitrile monomeric units | oxalylamido monomeric units (1) |
|---|---|---|---|
| | | | |
| | %wt | %wt | %wt |
| LD-comp | 66 | 44 | - |
| LD-01 | 56 | 29 | 15 Oxam monomer 1 |
| LD-02 | 56 | 29 | 15 Oxam monomer 1 |
| LD-03 | 63 | 32 | 5 Oxam monomer 2 |
| LD-04 | 56 | 29 | 15 Oxam monomer 2 |
| LD-05 | 63 | 32 | 5 Oxam monomer 2 |

| | | | |
|---|---|---|---|
| (1) see Table 1; (2) the average particle size was measured with a Brookhaven BI-90 analyzer, commercially available from Brookhaven Instrument Company, Holtsville, NY, USA. The measurements were performed according the ISO 13321 procedure (first edition, 1996-07-01). | | | |

### 4. Preparation of the coating solutions

### Comparative coating solution CS-comp

Table 3 lists the dry coating weight of the ingredients used in the preparation of the comparative coating solution. To 71,48g of demineralised water 8,55g of a 13 w% latex dispersion (see Table 2) was added. Furthermore, 9,52g of 3w% IR-2 dispersion was added, followed by the addition of 0,41g of pigment and 9,09g poly(acrylic acid) binder. Finally, 0,95g of complexing agent, 0,32g coating surfactant and 0,64g solubility enhancer were added to this mixture. The total solution mass reached 100 g.

### Inventive coating solutions CS-01 to CS-08 including thermoplastic polymer particles including an oxalylamido moiety

Table 3 lists the dry coating weight of the ingredients used in the preparation of the inventive coating solutions. To 70,26 g of demineralised water, 8,77g of a 12,67 wt% latex dispersion LD-01 to LD-05 (see Table 1) was added. Furthermore, 9,52 g of IR-2 was added, followed by the addition of 0,41 g of pigment and 9,09 g poly(acrylic acid). Finally, 0,95 g of a complexing agent, 0,32 g coating surfactant and 0,64 g solubility enhancer were added to this mixture. The total solution mass in each example reaches 100 g.

**Table 3: Dry coating weight of the ingredients used in the coating solutions CS-comp and CS-01 to CS-05**

| Ingredients* | CS-comp g/m² | CS-01 to CS-05 g/m² |
|---|---|---|
| Latex Dispersion LD-comp(1) | 400.0 | - |
| Latex Dispersion LD-01 to LD-05 (1) | - | 400.0 |
| Polyacrylic Acid binder (2) | 32.0 | 32.0 |
| IR-2 (3) | 68.4 | 68.4 |
| Pigment (4) | 20.0 | 20.0 |
| Complexing agent (5) | 20.0 | 20.0 |
| Surfactant (6) | 5.0 | 5.0 |
| Solubility enhancer (7) | 25.7 | 25.7 |

| | | |
|---|---|---|
| * : active ingredients in the coating | | |

1) Latex dispersions; see Table 2;
2) Aqueous solution containing 1.5 wt.% Aqualic AS58 commercially available from Nippon Shokubai; 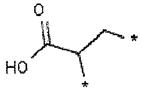
3) An aqueous dispersion containing 3.0 wt.% of IR-2: 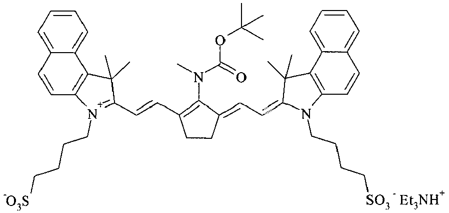 IR-2 may be prepared by well known synthesis methods such as for example disclosed in EP 2 234 964;
4) Pigment, an aqueous blue pigment 5%wt dispersion IJX 1880 commercially available from Cabot Corporation. 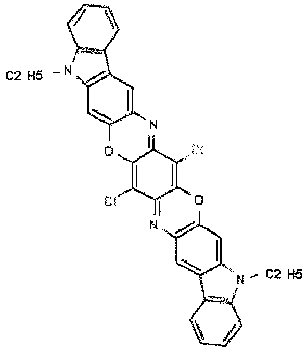
5) Al-ion complexing agent: aqueous solution containing 6%wt 1-hydroxyethylidene-1,1-diphosphonic acid ammonium salt commercially available from Monsanto Solution Europe;
6) Zonyl FS0100, an aqueous solution containing 5%wt of the fluorinated surfactant Zonyl FS0100 commercially available from Dupont;
7) Solubility enhancer, Ufacid K, 5%wt solution commercially available from Unger Fabrikker AS.

### 5. Preparation of the printing plate precursors PPP-01 to PPP-06

### Coating

The coating solutions CS-comp and CS-01 to CS-05 were repectively coated on the support S-01 as described above, with a coating knife at a wet thickness of 30 µm. After drying on a plate at 35°C for 10 minutes, the printing plate precursors PPP-01 to PPP-06 were obtained with the coating composition as listed in Table 4.

**Table 4 printing plate precursors PPP-01 to PPP-06**

| Printing plate precursor | Coating solution |
|---|---|
| PPP-01, *comparative* | CS-comp |
| PPP-02, *inventive* | CS-01 |
| PPP-03 *inventive* | CS-02 |
| PPP-04 *inventive* | CS-03 |
| PPP-05 inventive | CS-04 |
| PPP-06 *inventive* | CS-05 |

### Exposure

The printing plate precursors were exposed with a Creo Trendsetter 3244 (external drum platesetter available from Kodak), having a 20 W thermal head, operating at 130 rpm. The imaging resolution amounted to 2400 dpi. Each printing plate precursor was exposed using the same sensitivity value, i.e. 160 mJ/cm².

### Press life

The exposed printing plate precursors were cut to the correct size to allow them to be mounted side-by-side on a Heidelberg GTO 46 sheetfet press under abrasive conditions (0,5 w% CaCO₃ particles in the ink). The printing was performed on Maxi offset N 70 g/m² paper (commercially available from IGEPA) using K+E 800 Skinnex ink (commercially available from Flint Group) and 2% Prima FS404AS (commercially available from Agfa Graphics N.V.).

The press life of each printing plate was evaluated by monitoring after every 10.000 impressions the rendition (density) on the printed sheet of a test pattern with a nominal tone value of 40% (200 lpi ABS (Agfa Balanced Screening)) using a Gretag-MacBeth D19C (commercially available from GretagMacbeth AG, magenta filter setting). The press life of each printing plate is defined as the sheet at which the density of the 40% test pattern drops with 4% (absolutely). The result of the press life test is a measure of the press life of the plate. Results are given in Table 5 below.

**Table 5: press life results**

| **Examples** | **Latex (1)** | **Press life (2)** |
|---|---|---|
| PP-00 *Comparative* | LD-comp | 20 000 |
| PP-01 *Inventive* | LD-01 | 25 000 |
| PP-02 *Inventive* | LD-02 | 30 000 |
| PP-03 *Inventive* | LD-03 | 30 000 |
| PP-04 *Inventive* | LD-04 | 35 000 |
| PP-05 *Inventive* | LD-05 | 35 000 |

| | | |
|---|---|---|
| (1) see Tables 2 and 3; (2) the press life is defined as the sheet at which the density of a test pattern with a nominal tone value of 40% (200 lpi ABS (Agfa Balanced Screening)) drops with 4% (absolutely). | | |

An improved press life was obtained for the inventive printing plates PP-01 to PP-05, i.e. the printing plates comprising the thermoplastic polymer particles including an oxalylamido moiety.

## Claims

1. Thermoplastic polymer particles including at least one polymer including monomeric units derived from the monomers selected from ethylene, (vinyl)chloride, methyl(meth)acrylate, ethyl (meth)acrylate, vinylidene chloride, (meth)acrylonitrile, vinylcarbazole and/or styrene,
**characterized in that** the polymer further comprise at least one monomeric unit including an oxalylamido moiety.

2. Thermoplastic polymer particles according to claim 1 wherein the oxalylamido moiety is represented by structure I: 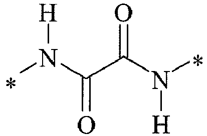 wherein
* denotes the linking positions to the rest of the structure.

3. Thermoplastic polymer particles according to any of the preceding claims wherein the monomeric unit including an oxalylamido moiety is derived from the monomer represented by 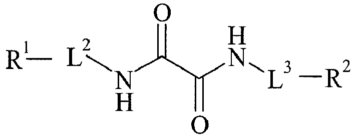 wherein
R¹ represents a group including a free radical polymerisable group;
R² represents a terminal group; and
_{L}² and L³ independently represent a divalent linking group.

4. Thermoplastic polymer particles according to any of the preceding claims wherein the particles have an average diameter between 15 nm and 50 nm.

5. Thermoplastic polymer particles according to any of the preceding claims wherein the particles have an average diameter between 25 nm and 35 nm.

6. Thermoplastic polymer particles according to any of the preceding claims wherein the polymer includes 2 to 40 %wt of monomeric units including an oxalylamido moiety.

7. Method for making the thermoplastic polymer particles according to any of the preceding claims comprising the step of reacting at least one monomer selected from ethylene, (vinyl)chloride, methyl(meth)acrylate, ethyl(meth)acrylate, vinylidene chloride, (meth)acrylonitrile, vinylcarbazole and/or styrene and at least one monomer as defined in claim 3.

8. An aqueous composition comprising thermoplastic polymer particles according to any of the preceding claims 1 to 6 including a surfactant and a hydrophilic binder.

9. A heat-sensitive negative-working lithographic printing plate precursor including on a support having a hydrophilic surface or which is provided with a hydrophilic layer, a coating containing an image-recording layer comprising thermoplastic polymer particles as defined in claims 1 to 6.

10. A heat-sensitive negative-working lithographic printing plate precursor according to claim 9 wherein the amount of the thermoplastic polymer particles present in the imaging layer is at least 55%wt, relative to the weight of all the ingredients in the image-recording layer.

11. A method for making a lithographic printing plate precursor comprising the steps of
(i) coating the aqueous composition according to claim 8 on a support having a hydrophilic surface or which is provided with a hydrophilic layer;
(ii) drying said coated composition.

12. A method for making a lithographic printing plate comprising the steps of:
- image-wise exposing the printing plate precursor according to claims 9 or 10 to heat and/or infrared light;
- developing the exposed precursor.

13. A method according to claim 12 wherein the development step is carried out by applying a gum solution to the exposed printing plate thereby at least partially removing unexposed areas of the coating.

14. The method according to claim 12 wherein the development step is carried out by applying an alkaline solution to the exposed printing plate thereby at least partially removing unexposed areas of the coating.

15. The method according to claim 12 wherein the developing step is carried out on press.
